Europäisches Patentamt

European Patent Office

Office européen des brevets

(11) Veröffentlichungsnummer: **0 062 210**
**B1**

(12) **EUROPÄISCHE PATENTSCHRIFT**

(45) Veröffentlichungstag der Patentschrift:
14.05.86

(21) Anmeldenummer: 82102335.5

(22) Anmeldetag: **22.03.82**

(51) Int. Cl.⁴: **C 08 L 75/04,** C 08 K 3/22,
C 08 K 5/02, C 08 K 5/04,
C 08 K 5/52, H 01 B 3/30,
C 08 J 5/18

(54) Halogenarmes, thermoplastisches Polyurethanelastomer verbesserter Flammbeständigkeit durch Zusatz einer 4-Stoff-Additiv-Kombination, seine Herstellung und seine Verwendung.

(30) Priorität: 02.04.81 DE 3113385

(43) Veröffentlichungstag der Anmeldung:
13.10.82 Patentblatt 82/41

(45) Bekanntmachung des Hinweises auf die Patenterteilung:
14.05.86 Patentblatt 86/20

(84) Benannte Vertragsstaaten:
BE DE FR GB IT NL

(56) Entgegenhaltungen:
DE - A - 2 328 534
FR - A - 2 165 999
FR - A - 2 268 853
FR - A - 2 314 928

Die Akte enthält technische Angaben, die nach dem Eingang der Anmeldung eingereicht wurden und die nicht in dieser Patentschrift enthalten sind.

(73) Patentinhaber: BAYER AG, Konzernverwaltung RP
Patentabteilung, D-5090 Leverkusen 1 Bayerwerk (DE)

(72) Erfinder: Goyert, Wilhelm, Dr., Haberstrasse 48,
D-5090 Leverkusen (DE)
Erfinder: Fleige, Wolfgang, Ing. grad., Bamberger
Strasse 10, D-5090 Leverkusen (DE)
Erfinder: Hoppe, Hans-Georg, Ing. grad., Kurlandweg 31,
D-5653 Leichlingen (DE)
Erfinder: Wagner, Hans, Dr., Tizianstrasse 13,
D-4047 Dormagen (DE)

**Beschreibung**

Die Erfindung betrifft halogenarme, thermoplastisch verarbeitbare Polyurethanelastomere (TPU), die durch eine spezielle 4-Stoff-Additiv-Mischung eine unerwartet günstige Kombination in den elektrischen Oberflächeneigenschaften, im Flammschutzverhalten und in der Abriebfestigkeit erhalten.

Es ist bekannt, dass man thermoplastischen Polyurethan-Elastomeren ein Konzentrat aus Antimontrioxid und bromierten Diphenylethern oder Polystyrol zusetzen kann (DE-A-2 901 774). Beispiele für die Flammschutzwirkung werden hier nicht gebracht. Phosphorverbindungen und Aluminiumhydroxid werden nicht erwähnt.

Bei Polyurethanschaumstoffen (US-A-3 971 760) werden Beispiele von bromierten Phenoxyverbindungen und Antimontrioxid erläutert. Aluminiumhydroxid wird erwähnt, ist aber nicht Voraussetzung für das Zustandekommen der Flammschutzwirkung. Kettenverlängerer und Phosphorverbindungen fehlen in dieser Zusammensetzung.

Feuerhemmende Zubereitungen auf Basis Phosphatester und Aluminiumoxidtrihydrat werden in der DE-A-2 263 005/FR-A-2 165 999 beansprucht. Es wird von einem selbstblähenden Polyurethan gesprochen, das nicht Gegenstand dieser Erfindung ist; der Zusatz erfolgt vorzugsweise zu PVC oder seinen Copolymeren, sowie SBR-Kautschuk; Halogenverbindungen und Antimontrioxid werden nicht eingesetzt. Die Abriebbeständigkeit dieser Produkte mit vorzugsweise hohen Mengen an Phosphorverbindungen und Aluminiumoxidtrihydrat ist ungünstig.

Die DE-A-2 328 534 beschreibt für Polyurethane die Mitverwendung bestimmter bromierter Diphenoxyalkane, vorzugsweise in einer Menge von etwa 5–20 Gew.-%. Als Verbesserungsmittel können zusätzlich Antimon-, Arsen-, Wismuth-, Zinn- oder Zink enthaltende Verbindungen vorzugsweise Sb₂O₃, mitverwendet werden (1–15 Gew.-%, vorzugsweise 2–10 Gew.-%). In den Beispielen wird gezeigt, dass bei flexiblen PU-Schaumstoffen eine ausreichende Wirkung (Self exstinguishing-SE) erst bei sehr hohen Zusatzmengen (6–11 Gew.-%) erreicht werden kann. Die Wirkung von Sb₂O₃ als Verlängerungsmittel wird im Beispiel 2) als «verbessernd» beschrieben, jedoch nicht quantifiziert.

Die FR-A-2 314 928 beschreibt die Herstellung von Isocyanurat-(PU)-Hartschaumstoffen durch Einbau von 2,3-Dibrom-2-butendiol-1,4 zu 30–60% des Polyols, unter Zusatz von u.a. Antimon-trioxid (1–20%, bezogen auf Polyisocyanat und Aluminiumhydrat (10–100%) bezogen auf Polyisocyanat).

Wie die Beispiele zeigen, werden sowohl hohe Mengen Sb₂O₃, 5–8%, wie auch Aluminiumoxidtrihydrat (40–50%) eingesetzt. Ausserdem werden 3–10 Gew.-% an halogenhaltigen Diolverbindungen (8–10 Gew.-% Dibrombutendiol) in den Schaumstoff eingebaut. Der Einbau der Dibromverbindung ändert die Eigenschaften erheblich. Ausserdem liegen die Einbaumengen an Dibrombutendiol, Sb₂O₃ und Aluminiumoxidhydrat weit oberhalb der in unserer Erfindung angegebenen Grenzen für die 4-Stoffkombination.

Die Kombination Siliciumdioxid, Antimontrioxid, Brom- und Phosphorverbindungen werden bei linearen Polyestern beschrieben (DE-OS 2 242 509). Feinverteiltes Siliciumdioxid in einer Menge von (bevorzugt 5) 5 bis 12 Gew.-% ist hier Voraussetzung der Wirkung. Die Abriebbeständigkeit solcher Polyurethanelastomerer (sowie andere Festigkeiten) werden hierdurch vermindert. Der wichtige Synergist Aluminiumhydroxid fehlt in der genannten Kombination.

All diese Produkte sind nicht in der Lage, eine thermoplastische Polyurethan-Elastomer so auszurüsten, dass ein daraus gefertigter Werkstoff die besonderen Eigenschaftskombinationen wie hohe Festigkeit, gute Abriebbeständigkeit, hohen Weiterreisswiderstand, eine gute Flammfestigkeit nach verschiedenen Normen, z.B. VDE 0472 und verbesserte elektrische Oberflächeneigenschaften aufweist.

Überraschenderweise wurde nun gefunden, dass auch sehr halogenarme thermoplastische Polyurethan-Elastomere mit verbesserten Flammschutz-, elektrischen Oberflächenleitfähigkeits- und Abriebeigenschaften nach dem erfindungsgemäss vorgeschlagenen Verfahren hergestellt werden können. Das Verfahren ist dadurch gekennzeichnet, dass man

A) dem thermoplastischen Polyurethanelastomeren 2,5 bis 24 Gew.-% (vorzugsweise 5 bis 10 Gew.-%) einer Kombination aus mindestens 4 Additiv-Komponenten in Mengenanteilen von

B) 1 bis 10 Gew.-% (vorzugsweise 3 bis 6 Gew.-%) an Antimontrioxid,

C) 0,3 bis 6 Gew.-% (vorzugsweise 0,5 bis 2 Gew.-%) an chlorierten und/oder bromierten aromatischen Verbindungen mit einem Halogengehalt von 50 bis 88 Gew.-% (vorzugsweise 58 bis 75 Gew.-%),

D) 1 bis 8 Gew.-% (vorzugsweise 1,5 bis 4 Gew.-%) Aluminiumhydroxid in einer Körnung von 0,1 bis 100 μm (vorzugsweise 2 bis 40 μm).

E) 0,2 bis 4 Gew.-% (bevorzugt 0,3 bis 1 Gew.-%) an Phosphorsäuretrisester (vorzugsweise aromatischem Phosphorsäuretrisester) und gegebenenfalls

F) bis zu 5 Gew.-% an quartären Tetraalkylammoniumsalzen

vor, während oder nach der polyurethanbildenden Reaktion einverleibt und/oder in Form eines Konzentrats dem thermoplastischen Polyurethan zumischt.

Gegenstand der Erfindung sind auch halogenarme, thermoplastische, Flammschutzmittel und Füllstoffe enthaltende Polyurethanelastomere mit verbesserten Flammschutz-, elektrischen Oberflächen-, Abrieb- und Wärmestandeigenschaften, bestehend aus

A) 97,5 bis 76 Gew.-% (bevorzugt 95 bis 85 Gew.-%) eines – gegebenenfalls Lichtschutzmittel, Antioxidantien und/oder UV-Absorber enthaltenden – thermoplastischen Polyurethanelastomeren,

2,5 bis 24 Gew.-% (vorzugsweise 5 bis 10 Gew.-%) an den Komponenten B) bis F), in Mengenanteilen von

B) 1 bis 10 Gew.-% (vorzugsweise 3 bis 6 Gew.-%) Antimontrioxid,

C) 0,3 bis 6 Gew.-% (vorzugsweise 0,5 bis 2 Gew.-%) an chlorierten und/oder bromierten Verbindungen mit einem Halogengehalt von 50 bis 88 Gew.-% (vorzugsweise 58 bis 75 Gew.-%),

D) 1 bis 8 Gew.-% (vorzugsweise 1,5 bis 4 Gew.-%) an Aluminiumhydroxid in einer Körnung von 0,1 bis 100 µm (vorzugsweise 2 bis 40 µm),

E) 0,2 bis 4 Gew.-% an Phosphorsäuretriestern, vorzugsweise 0,3 bis 1 Gew.-% an aromatischen Phosphorsäuretriestern und gegebenenfalls

F) bis zu 5 Gew.-% an quartären Tetraalkylammoniumsalzen.

Insbesondere sind Gegenstand der Erfindung Polyurethanelastomere, dadurch gekennzeichnet, dass sie 5 bis 10 Gew.-% der Additionskomponenten B) bis F) und 95 bis 90 Gew.-% eines thermoplastischen Polyurethanelastomeren auf Basis

a) eines aromatischen Diisocyanates,

b) eines 2 Hydroxylgruppen aufweisenden Polyesters und Polyethers vom Molekulargewicht 800 bis 6000 oder Gemischen aus Polyestern und Polyethern, und

c) als Diolkettenverlängerer Butandiol-1,4, Hexandiol-1,6 und/oder Hydrochinon-di-β-hydroxyethylether enthalten,

wobei das NCO/OH-Äquivalentverhältnis zwischen 0,90 und 1,1 : 1 und das Molverhältnis der Komponenten b) und c) 1 : 1,5 bis 1 : 8 beträgt.

Durch die erfindungsgemässen Additivkombinationen werden die elektrischen Oberflächeneigenschaften der Werkstoffe hinsichtlich des Oberflächenwiderstandes (niedriger) und der Durchschlagfestigkeit (höher) verbessert. Die thermischen Eigenschaften sind geändert, indem die Wärmestandfestigkeit erwünschtermassen relativ hoch ist. Die Flammschutzanforderungen hinsichtlich der Prüfnorm VDE 0472 werden erfüllt (obwohl nur relativ sehr wenig Halogen in den Werkstoffen vorhanden ist, was sich durch eine synergistische Wirkung dieser bei thermoplastischen Polyurethanelastomeren neuen Wirkstoffkombination erklären lässt).

Auch die Abriebbeständigkeit ist trotz der vielen Additive gut erhalten.

A) Die thermoplastischen Polyurethanelastomeren entsprechen im wesentlichen dem Stand der Technik. Sie sind aus langkettigen Polyolen vom Molekulargewicht 400 bis 10 000, Poly- bevorzugt Diisocyanaten und Kettenverlängerungsmitteln vom Molekulargewicht bis 399 (bevorzugt kurzkettigen Polyolen vom Molekulargewicht bis 380) aufgebaut, wobei das Äquivalentverhältnis von Isocyanatgruppen zu Zerewitinoff-aktiven H-Atomen (hier NCO/OH-Verhältnis genannt) vorzugsweise zwischen 0,90 und 1,10, besonders bevorzugt zwischen 0,98 und 1,04, liegt.

Als im wesentlichen lineare Polyole mit Molekulargewichten zwischen 400 und 10 000, bevorzugt zwischen 800 und 6000, kommen erfindungsgemäss praktisch alle an sich bekannten, vorzugsweise zwei, gegebenenfalls – in untergeordneten Mengen auch drei – Zerewitinoff-aktive Gruppen (im wesentlichen Hydroxylgruppen) enthaltenden Polyester, Polylactone, Polyether, Polythioether, Polyesteramide, Polycarbonate, Polyacetale, aber auch Vinylpolymere wie z.B. Polybutadiendiole, sowie bereits Urethan- oder Harnstoffgruppen enthaltende Polyhydroxylverbindungen, gegebenenfalls modifizierte natürliche Polyole, sowie auch andere Zerewitinoff-aktive Gruppen wie Amino-, Carboxyl- oder Thiolgruppen enthaltende Verbindungen in Betracht. Diese Verbindungen entsprechen dem Stand der Technik und werden z.B. in den DE-A-23 02 564, 24 23 764 und 25 49 372 (US-A-3 963 679) und DE-A-24 02 840 (US-A-3 984 607), der DE-B-24 97 387 (US-A-4 035 213) und der DE-A-2 854 384 eingehend beschrieben.

Erfindungsgemäss bevorzugt sind hydroxylgruppenhaltige Polyester aus Dialkoholen und Adipinsäure, Polycarbonate, Polycaprolactone, Polyethylenoxid-, Polypropylenoxid-, Polytetrahydrofuranpolyether und Mischpolyether aus Ethylenoxid und Propylenoxid und gegebenenfalls Tetrahydrofuran. Besonders bevorzugt sind Gemische aus Polypropylenglykolethern (gegebenenfalls auch ihre Copolyetherderivate mit Ethylenoxidanteilen) und Adipinsäure-Diolestern (besonders Adipinsäure-$C_4$–$C_6$-Diol-Polyestern oder Polycarbonatdiolen, besonders Hexandiolpolycarbonaten). Thermoplastische Polyurethanelastomere auf dieser Basis mit den genannten Additiven zeichnen sich neben den oben beschriebenen Vorteilen durch eine verbesserte Mikrobenresistenz und auch eine gute Festigkeit aus.

Erfindungsgemäss zu verwendende Diisocyanate sind die an sich bekannten aliphatischen, cycloaliphatischen, araliphatischen, aromatischen und heterocyclischen Diisocyanate des Standes der Technik, wie sie z.B. in den bereits genannten DE-A-23 02 564, 24 23 764, 25 49 372, 24 02 840, 24 57 387 und 28 54 384 beschrieben sind. Erfindungsgemäss bevorzugte Diisocyanate sind Hexamethylendiisocyanat, Isophorondiisocyanat, Naphthylen-1,5-diisocyanat, Toluylendiisocyanate, und die Diphenylmethandiisocyanat-Isomeren. Besonders bevorzugt ist das 4,4'-Diisocyanato-diphenylmethan.

Die genannten Diisocyanate können in gegebenenfalls zusammen mit bis ca. 15 Mol-% (bezogen auf Diisocyanat) eines höherfunktionellen Polyisocyanats eingesetzt werden; die Menge des höherfunktionellen Polyisocyanats muss jedoch so begrenzt werden, dass ein noch schmelzbares bzw. thermoplastisches Produkt erhalten wird. Eine grössere Menge an höherfunktionellen Isocyanaten muss im allgemeinen durch die Mitverwendung von im Durchschnitt weniger als difunktionellen Hydroxyl- bzw. Aminoverbindungen (bzw. auch von Monoisocyanaten) ausgeglichen werden, so dass eine zu weit gehende chemische Vernetzung des Produktes vermieden wird. Beispiele für höherfunktionelle Isocyanate monofunktioneller Verbindungen sind ebenfalls dem oben zitierten Stand der Technik zu entnehmen. Beispielsweise seien Monoamine wie Butyl- und Dibutylamin, Oxylamin, Stearylamin, N-Methylstearylamin, Pyrrolidin, Piperidin und Cyclohexylamin, sowie Monoalkohole wie Butanol-1, 2-Ethylhexanol-1, 1-Dodecanol, Cyclohexanol und Ethylenglykolmonomethylether erwähnt.

Auch die erfindungsgemäss einzusetzenden Kettenverlängerungsmittel sind an sich bekannt und z.B. in den bereits genannten DE-OS'en (s. Diisocyanataufzählung) beschrieben. Es sind dies niedermolekulare Polyalkohole, vorzugsweise Diole, Polyamine, Hydrazine und Hydrazidderivate. Auch Aminoalkohole wie Ethanolamin, Diethanolamin, n-Methyldiethanolamin, 3-Aminopropanol, Hydrazin oder Carbodihydrazid kommen erfindungsgemäss in Frage. Bevorzugte Kettenverlängerungsmittel sind Diole, wie z.B. Ethylenglykol, Di- und Triethylenglykol, besonders aber 1,6-Hexandiol und Hydrochinon-di-β-hydroxyethylether, sowie in den überwiegenden Fällen bevorzugt das 1,4-Butandiol.

Die erfindungsgemäss beschriebenen Werkstoffe werden in einem Shore Härte Bereich von von 70 A bis ca. 60 D, insbesondere von 80 A bis 92 A, eingesetzt. Dies entspricht einem Molverhältnis von langkettigem Polyol (höhermolekularer Polyhydroxylverbindung) zu Kettenverlänger (vorzugsweise zweiwertigen Verbindungen mit einem Molekulargewicht bis 399) von ca. 1 : 1,5 bis 1 : 8, bevorzugt 1 : 2 bis 1 : 5.

Den Polyurethankomponenten können selbstverständlich die üblichen Hydrolyse- und Oxidationsstabilisatoren entsprechend dem Stand der Technik zugesetzt werden. Es empfiehlt sich, zusätzlich zur Stabilisierung des Polyurethans Antioxidantien wie 2,6-Di-tert.-butyl-4-methylphenol, andere sterisch gehinderte Phenole und/oder organische Phosphite und/oder Phosphonite und/oder andere übliche Antioxidantien einzeln oder in Mischung in einer Menge von etwa 0,1 bis 1,5 Gew.-%, bezogen auf TPU, zuzugeben. Auch UV-Absorber und Lichtschutzmittel auf Benztriazol-, 2,2,6,6-Tetramethyl-piperidin-, 1,2,2,6,6-Pentamethyl-piperidin- oder Benzophenon-Basis, sowie andere UV-Absorbertypen können dem TPU beigegeben werden. Die Hydrolyseschutzmittel basieren üblicherweise auf Carbodiimid-, Harnstoff-, Cyanat- oder Oxazolidin-Basis.

B) Dem beanspruchten thermoplastischen Polyurethan werden ca. 1 bis 10, bevorzugt 3 bis 6 Gew.-% Antimonverbindungen zugesetzt, wobei feingemahlenes Antimontrioxid (Sb₂O₃) bevorzugt verwendet wird.

C) Halogenverbindungen brauchen in der erfindungsgemässen Kombination zur Erzielung der gewünschten Flammschutzwirkung nur in sehr geringen Anteilen zugesetzt zu werden (0,3 bis 6 Gew.-%, bevorzugt 0,5 bis 2 Gew.-%). Hierdurch bedingt sich schädliche Halogenwasserstoffe beim Verbrennen der entsprechend halogenarm ausgerüsteten TPU nur in sehr untergeordnetem Massstab zu beobachten.

Als Halogenverbindungen sind chlorierte oder bromierte Verbindungen mit 50 bis 88 Gew.-% Halogen, bevorzugt 58 bis 75 Gew.-% Halogen geeignet, z.B. Dechlorane-604 bzw. Dechlorane-510 der Hooker Chemicals, Niagara Falls/USA. Die Halogenverbindungen sollen bei der Verarbeitungstemperatur der thermoplastischen Polyurethane, etwa zwischen 220 und 250 °C, hinreichend thermostabil sein. Bevorzugt sind bromierte Aromaten, z.B. Pentabromtoluol, Hexabrombenzol, besonders aber wenig flüchtige aromatische Bromverbindungen wie Tetrabrom-4,4'-dihydroxyphenyl-dimethylmethan, bromierte Diphenylether mit ca. 67 bis 71 Gew.-% Brom (Gemische mit Pentabromdi-phenyl-ether als Hauptbestandteil), höherbromierte Diphenylether wie Decabromdiphenylether (82 bis 83 Gew.-% Brom), bromierte Polyphenylether, wobei der Pentabromdiphenylether besonders bevorzugt ist.

Besonders bevorzugt sind Polyurethanelastomere, dadurch gekennzeichnet, dass Polybromdiphenyle, Polybromdiphenylether und/oder Polybrompolyphenylether in einer Menge von 0,3 bis 1 Gew.-% verwendet werden.

Aluminiumhydroxid wird in einer Körnung von 0,1 bis 100 µm, bevorzugt 2 bis 40 µm, in Mengen von 1 bis 8, bevorzugt 1,5 bis 4 Gew.-% eingesetzt. Aluminiumhydroxid (Al(OH)₃) besteht zu mindestens 65 Gew.-% aus Al₂O₃, enthält noch etwa 2 bis 3 Mol (gebundenes) Wasser und vermag oberhalb 200 °C Wasser abzuspalten. In den Beispielen wurde Martinal BM/2 der Martinswerk GmbH, Bergheim/Erft, Bundesrepublik Deutschland, verwendet. Durch diesen geringen Anteil an anorganischem Füllstoff werden die «klassischen» Eigenschaften von thermoplastischen Polyurethanelastomeren, wie Abriebfestigkeit und Weiterreisswiderstand kaum beeinflusst und weisen noch ein hervorragendes Niveau auf.

Erfindungsgemässe Phosphorverbindungen sind bei der Thermoplastverarbeitungstemperatur von grösser = 200 °C, bevorzugt grösser = 240 °C, thermostabile Phosphorsäuretrisester, z.B. aliphatische Phosphate wie Trioctylphosphat, Tridodecylphosphat, araliphatische Phosphorester wie Di-phenyl-dodecylphosphat und bevorzugt aromatische Phosphate, wie z.B. Tri-phenylphosphat, wobei Di-phenyl-kresyl-phosphat bevorzugt eingesetzt wird. Die Zusatzmengen sind relativ gering (0,2 bis 4, bevorzugt 0,3 bis 1 Gew.-%). Hierdurch bedingt behalten die thermoplastischen Polyurethane ihre guten Eigenschaften wie Ölbeständigkeit und hohe mechanische Festigkeiten bei und weisen zudem die erfindungsgemäss oben beschriebenen weiteren Vorteile in synergistischer Mischung auf.

Den erfindungsgemäss stabilisierten thermoplastischen Polyurethanen können gegebenenfalls 0 bis 5 Gew.-% quartäre Ammoniumverbindungen wie Tetraalkylammoniumethylsulfat (vertrieben als «Catafor CA 100» von Fa. Langer & Co., 2863 Ritterhude/Bremen, Postfach 1, Bundesrepublik Deutschland) zugesetzt werden. Durch ca. 2 gew.-%ige Zugabe wird insbesondere der Oberflächenwiderstand auf günstig niedrige Werte von ≤ 2 × 10⁹ Ohm eingestellt. Gleichzeitig verbessern sich die Flammschutzeigenschaften positiv. Weitere mögliche Zusatzmittel zur Verminderung statischer Aufladungen sind z.B. Russ, Graphitstaub, Kohlenstoffasern, Metalloxide wie Kupferoxide, Metallpulver wie Kupfer- oder Aluminiumpulver. Ferner können auch Antistatikmittel auf z.B. Acryl-Sulfonat-Basis zugesetzt werden. Die quartären Ammoniumverbindungen und die weiteren festen Zusätze wie Russ oder Metallpulver werden vorzugsweise auf einer Zweiwellenknetmaschine mit den reagierenden Polyurethanbestandteilen umgesetzt.

Die erfindungsgemäss modifizierten thermoplastischen Polyurethane weisen eine Reihe von Vorteilen auf. Durch die relativ geringen Mengen an synergistisch wirkenden Zusatzmitteln, bevorzugt insgesamt ca. 5 bis 15 Gew.-%, werden die Polyurethane in ihren Eigenschaften in vielfältiger Hinsicht verbessert. Die elektrischen Eigenschaften wie Oberflächenwiderstand (erniedrigt) und Durchschlagfestigkeit (erhöht) werden verändert. Die Flammeigenschaften von z.B. ummantelten Kabeln werden gemäss VDE 0472 erfüllt, auch die Kabelleitertests werden bestanden (s. Beispiele). Die Wärmestandfestigkeit dieser neuartigen thermoplastischen Polyurethane ist relativ hoch. Die Abriebfestigkeit nach DIN 53 516 ist günstiger als die der meisten PVC- und Gummitypen. Zugfestigkeit und Weiterreisswiderstand sind hoch.

Die erfindungsgemässen Werkstoffe werden insbesondere dort eingesetzt, wo flammgeschützte Produkte mit teils verbesserten elektrischen Eigenschaften benötigt werden, vorzugsweise bei Kabelummantelungen, bei Gehäusen der verschiedensten Art, bei Schläuchen und Förderbändern, insbesondere im Bergbau, bei Teilen oder Formkörpern im Karosseriebau, bei Rollen usw. Die neuen Werkstoffe können spritzgegossen, extrudiert und nach den übrigen üblichen Verfahren der Thermoplastverarbeitung umgeformt werden. Durch Kalandrier- oder Blasverfahren können Folien hergestellt werden.

Die Polyurethanbildungsreaktion kann nach dem Giessprozess bzw. durch Umsetzung auf einer Reaktionsschnecke erfolgen und wird entsprechend in Beispielen beschrieben.

Die Zusätze B) bis F) können einzeln oder als Gemisch vor und/oder während der Polyurethan bildenden Reaktion, und/oder nachträglich zugegeben werden. Die Einarbeitung in Form eines Additiv-Konzentrates wird bevorzugt. Das Konzentrat aus den einzelnen Additiv-Komponenten kann vorher auf einer Thermoplastbasis wie ABS-Polymerisat, Polycarbonat, Ethylenvinylacetat oder PVC hergestellt werden. Bevorzugte polare Thermoplaste für diesen Zweck werden z.B. in der DE-A-28 54 409 beschrieben. Bevorzugt ist aber ein Konzentrat auf Polyurethanelastomerbasis mit Additivmengen von 25 bis 75 Gew.-%, bevorzugt 40 bis 70 Gew.-%.

Die Polyurethanreaktionen in einer Zweiwellenknetextrusionsmaschine (Beispiele 1 und 2) werden entsprechend den in den DE-C-813 154, 862 668 und 940 109, der DE-A-2 302 564 (US-A-3 963 679), sowie den US-A-3 233 025 und 3 642 964 beschriebenen Verfahren durchgeführt.

Die Verweilzeiten der Reaktionsschmelze in der Schneckenextrusionsmaschine betragen in der Regel 0,3 bis 30 Minuten, bevorzugt 0,5 bis 4 Minuten. Die Temperatur des Extrusionsschneckengehäuses liegt zwischen etwa 60 und 300 °C (ca. 80 bis 280 °C in der Eingangszone; ca. 100 bis 250 °C in der Mitte des Extruders und ca. 60 bis 210 °C in der Austragszone). Die aus dem Extruder austretende Schmelze wird nach an sich bekannten Verfahren abgeschreckt und zerkleinert. Die Verfahrensprodukte können auf die übliche Weise thermoplastisch zu Filmen und Folien, Kabelummantelungen, Dichtungen, Formkörpern wie Zahnrädern etc. verarbeitet werden. Die Mischung der Polyurethan bildenden Komponenten mit den Additiven kann auch direkt nach Durchführung der Reaktion in der Reaktionsschneckenmaschine zu Formkörpern verarbeitet werden.

Die folgenden Beispiele erläutern die Erfindung. Wenn nicht anders vermerkt, sind Mengenangaben als Gewichtsprozente zu verstehen. In den Beispielen 2 und 3 wird eine Zweiwellenschneckenknetextrudermaschine des Typs ZSK 53 V der Fa. Werner & Pfleiderer, Stuttgart, mit selbstreinigendem Wellenbesatz, verwendet. Die Länge des Verfahrensteils entspricht etwa dem 42-fachen Wellendurchmesser. Für alle Beispiele wird der gleiche Wellenbesatz mit einem Knetelementanteil von ca. 20% verwendet. Der Verfahrensteil besteht aus 12 Gehäusen, wobei das erste mit einem Einspeisetrichter für den Thermoplasten bzw. die Ausgangsmaterialien versehen ist. Funktion und Wirkungsweise der Schneckenmaschine, von Knet- und Förderelementen des Wellenbesatzes usw. sind in den Firmenschriften Werner & Pfleiderer bzw. in der DE-A-2 302 564 ausführlich beschrieben. Es werden bevorzugt Temperaturen von ≤ 200 °C, besonders bevorzugt ≤ 195 °C bei Extrusions- oder Spritzgussverfahren angewendet.

In den VDE-Tests (DIN 57472/Part 804, VDE 0472/1154, par. 37; IEEF 332) wurden Kabel verwendet, bei denen die in der Mitte des Kabels liegenden Leitungsdrähte in allen Fällen mit PVC umgeben sind. Hierfür ist es im allgemeinen ausreichend, nur bis zu 4% von chlorierten oder bromierten Verbindungen C) in der Additiv-Kombination des Kabelmantels zu verwenden.

Wenn jedoch die Leitungsdrähte mit halogenfreien Polymeren (z.B. Polyethylen oder EPDM) ummantelt sind, dann muss der Gehalt der chlorierten oder bromierten Verbindungen C) innerhalb der Additiv-Kombination des Kabelmantels bis auf 6 Gew.-% erhöht werden, um einen ausreichenden Flammschutz für das Kabel zu erzielen.

Beispiele

Die flammgeschützten thermoplastischen Polyurethanelastomeren lassen sich im Direktverfahren bzw. über die Zwischenstufe eines Additivkonzentrats auf einer zweiwelligen Knetschneckenextrusionsmaschine (Fa. Werner & Pfleiderer, ZSK 53) herstellen. Die Herstellung nach dem Giessverfahren ist ebenfalls möglich.

1. Giessverfahren, direkt in einem Arbeitsgang

A) In einem Reaktionskessel wird eine Mischung von:

62,89 Teilen Butandiol-1,4-adipinsäure-Polyester; Mol-Gewicht 2000 (OHZ 56),
0,25 Teilen Stearylamid (Gleitmittel für die PU-Herstellung)
6,30 Teilen Butandiol-1,4

3,41 Teilen Antimontrioxid
0,58 Teilen Pentabromidphenylether
1,70 Teilen Aluminiumoxidhydrat (= Aluminiumhydroxid) [1]
0,34 Teilen Diphenylkresylphosphat unter Rühren

[1] Vierkomponentenmischung 6,03 Gew.-%

auf 80 °C erhitzt.

Unter Rühren werden 24,53 Teile 4,4'-Diisocyanatodiphenylmethan (MDI) (60 °C warm) zugegeben. Das NCO/OH-Äquivalenthältnis beträgt 1,01. Nach 20 Sekunden Rühren wird das Reaktionsgemisch in eine 80 bis 100 °C heisse Wanne mit Teflon-Unterlage gegossen und etwa 1 Stunde ausgeheizt. Das etwa 1 cm dicke Fell wird dann in Streifen geschnitten und granuliert. Der Polyurethananteil im Elastomeren beträgt 93,97 Gew.-%.

Wie oben ausgeführt wird Antimontrioxid in Form eines feinen Pulvers bevorzugt. Aluminiumoxidhydrat wird ebenfalls als feinkörniges Pulver eingesetzt. (Verwendet wurde ein "Martinal BM-2 der Martinswerk GmbH, D-5010 Bergheim, Bundesrepublik Deutschland.)

Das Granulat weist nach zweitägiger Lagerung, Verspritzen bzw. Extrudieren und Temperung der Formkörper von 15 Stunden bei 80 °C folgende Eigenschaften auf:

| | Norm | | Masseinheiten |
|---|---|---|---|
| Zugfestigkeit | DIN 53504 | 43 | MPa |
| Reissdehnung | DIN 53504 | 650 | % |
| Abriebverlust | DIN 53516 | 55 | mm³ |
| Shore A-Härte | DIN 53505 | 83 | |
| Oberflächenwiderstand | DIN 53482 | $6,6 \cdot 10^{10}$ | $\Omega$ |
| Durchgangswiderstand | DIN 53482 | $2,3 \cdot 10^{10}$ | $\Omega$ cm |
| Durchschlagfestigkeit | DIN 53481 | 18,9 | KV/mm |
| UL-94-Test Nachbrenndauer UL-94-HB-Test | UL94 | 1 | s |
| Abbrandstrecke | | 15 | mm |
| Einstufung in: | | UL-94 V-0 | |
| VDE-Test[xx] | DIN 57472 Teil 804 Prüfart A | bestanden | |
| Nachbrennzeit | | 0 | s |
| zerstörte Probenlänge | | 10 | mm |

xx = Erläuterungen nach Punkt 3)

Erfindungsgemäss wurden weiterhin folgende Rezepturen unter Variation der Additivmengen hergestellt und geprüft. Bei der Herstellung wird wie im Beispiel 1A) verfahren.

| Versuch | PUR (Tle) | Antimontrioxid (Tle) | Pentabromdiphenylether (Tle) | Aluminiumoxidhydrat (Tle) | Diphenylkresylphosphat (Tle) |
|---|---|---|---|---|---|
| 1 B | 93,61 | 3,61 | 0,61 | 1,81 | 0,36 |
| 1 C | 92,33 | 4,33 | 0,74 | 2,17 | 0,43 |
| 1 D | 90,79 | 4,35 | 1,39 | 2,90 | 0,57 |
| 1 E | 90,55 | 2,77 | 1,99 | 4,15 | 0,54 |
| 1 F | 90,36 | 1,34 | 2,41 | 5,36 | 0,53 |
| 1 G | 90,06 | 2,54 | 1,83 | 5,07 | 0,50 |
| 1 H | 89,97 | 6,21 | 0,84 | 2,49 | 0,49 |

Alle aufgeführten Variationen erfüllen den Flammtest nach VDE. Der UL-94-Test wird mit V-0 bzw. teilweise mit V-2 bestanden. Die mechanischen Werte sind ähnlich wie bei dem Versuch 1A).

Zu den nicht erfindungsgemässen Vergleichen zählen:

I. Mischungen ohne Additive (Flammschutzmittel) = reines PUR

K. Mischungen mit der Zweierkombination Aluminiumoxidhydrat («Aluminiumhydroxid») (8 Gew.-Teile) und Di-phenyl-kresyl-phosphat (1,6 Gew.-Teile)

L. Mischungen mit der Zweierkombination Pentabrom-diphenylether (2,25 Gew.-Teile) und Antimontrioxid (1,6 Gew.-Teile).

Diese Mischungen I, K, L erfüllen als Kabelummantelung nicht die VDE-Norm 0472.

2. Direkte Einarbeitung der Additive auf einer Zweiwellenknetmaschine (ZSK 53)

A) Über je eine zweiwellige Dosierschnecke werden 6,21 Teile Antimontrioxid und 2,49 Teile Aluminiumoxidhydrat in den Trichter der Schneckenmaschine eingespeist. Ebenfalls werden über je eine Zahnrad-Dosierpumpe 0,84 Teile Pentabromdiphenylether und 0,49 Teile Diphenylkresylphosphat in den Trichter dosiert.

In Gehäuse 2 wird ein Semiprepolymer eindosiert, das vorher durch Umsetzung von 29,17 Teilen Polypropylenglykolether (Molgewicht ca. 2200; OH-Zahl 50) mit 24,80 Teilen 4,4'-Diisocyanatodiphenylmethan in Gegenwart von 0,12 Teilen Ionol bei ca. 80 bis 100°C 1 bis 2 Stunden lang gebildet wurde. Ausserdem wird in Gehäuse 2 die Lösung von 0,29 Teilen Stearylamid in 29,17 Teilen Butandiol-1,4/Adipinsäurepolyester (Molgewicht ca. 2000, OH-Zahl 56), sowie 6,42 Teile Butandiol-1,4 zugegeben, wobei das Gesamtverhältnis von NCO/OH-Gruppen 1,01 beträgt.

Die Einlauftemperaturen des Kettenverlängerers und der Flammschutzmittel liegen bei Raumtemperatur. An der Schneckenmaschine wurden folgende Gehäusetemperaturen eingestellt:

| Gehäuse | 1 | 3 | 5 | 7 | 9 | 11 | 12 | Kopf |
|---------|-----|-----|-----|-----|-----|-----|-----|--------|
| Temperatur | 100 | 180 | 180 | 180 | 130 | 100 | 80 | 190°C |

Es wird ein Polyurethanthermoplast erhalten, der nach zweitägiger Lagerung, Verspritzen bzw. Extrudieren und Temperung von 15 Stunden bei 80°C folgende Eigenschaften aufweist:

| | Norm | | Masseinheiten |
|---|---|---|---|
| Zugfestigkeit | DIN 53504 | 30 | MPa |
| Reissdehnung | DIN 53504 | 682 | % |
| Abrieb | DIN 53516 | 99 | mm$^3$ |
| Shore A-Härte | DIN 53505 | 81 | |
| Oberflächenwiderstand | DIN 53482 | $5 \cdot 10^{11}$ | $\Omega$ |
| Durchgangswiderstand | DIN 53482 | $3,9 \cdot 10^{11}$ | $\Omega$cm |
| Durchschlagsfestigkeit | DIN 53481 | 21,06 | KV/mm |
| UL-94-Test | | | |
| Nachbrenndauer | UL-94 | 4 | s |
| UL-94-HB-Test | | | |
| Abbrandstrecke | | 58 | mm |
| Einstufung in | | UL-94 V-2 | |
| VDE-Test[xx] | DIN 57472 Teil 804 Prüfart A | bestanden | |
| Nachbrennzeit | | 71 | s |
| zerstörte Probenlänge | | 13 | mm |

Auch in diesem Direktverfahren wurden weitere Kombinationen geprüft:

| Versuch | PUR (Tle) | Antimontrioxid (Tle) | Pentabromdiphenylether (Tle) | Aluminiumoxidhydrat (Tle) | Diphenylkresylphosphat (Tle) |
|---------|-------|-------|-------|-------|-------|
| 2 B | 90,79 | 4,35 | 1,39 | 2,90 | 0,57 |
| 2 C | 90,55 | 2,77 | 1,99 | 4,15 | 0,54 |
| 2 D | 92,26 | 1,28 | 0,89 | 5,08 | 0,49 |
| 2 E | 91,86 | 2,37 | 1,73 | 3,55 | 0,49 |
| 2 F | 93,28 | 2,91 | 2,08 | 1,43 | 0,30 |
| 2 G | 94,19 | 3,25 | 0,56 | 1,68 | 0,32 |
| 2 H | 92,74 | 0,59 | 1,68 | 4,74 | 0,25 |
| 2 I | 94,12 | 0,59 | 0,40 | 4,64 | 0,25 |

Die mechanischen Werte und das Ergebnis der Flammtests für die erfindungsgemässen Versuche 2B bis G und die Vergleichsversuche H/I ausserhalb der erfindungsgemässen Kombination sind in der folgenden Tabelle zusammengefasst:

| Versuchs-Nr. | 2 B | 2 C | 2 D | 2 E | 2 F | 2 G | 2 H | 2 I |
|---|---|---|---|---|---|---|---|---|
| Zugfestigkeit (MPa) | 31,7 | 25,6 | 21,7 | 20,8 | 23,1 | 21,1 | 8,81 | 12,4 |
| Reissdehnung (%) | 627 | 726 | 592 | 595 | 610 | 570 | 490 | 627 |
| Abrieb | 39 | 166 | 143 | 161 | 130 | 134 | 290 | 236 |
| Shore A Härte | 82 | 83 | 84 | 85 | 85 | 85 | 85 | 84 |
| UL-94-Test | V–2 | V–2 | V–2 | V–2 | V–2 | V–2 | V–2 | V–2 |
| VDE-Test | best. | *best. | best. | best. | best. | best. | nicht best. | nicht best. |

*best. = bestanden

3. Herstellung eines Additivkonzentrates auf der Basis einer weichen Estertype auf der Zweiwellenknetmaschine

A) Die Additive Antimontrioxid, Aluminiumoxidhydrat, Pentabromdiphenylether und Diphenylkresylphosphat werden wie unter 2.) in den Trichter der Schneckenwellenmaschine dosiert. In Gehäuse 2 werden die PUR-Rohstoffe mittels Pumpen eingespeist. Die Temperaturen von Bromverbindung und Ester liegen bei 100 °C. Das MDI wird mit 60 °C in die Maschine dosiert. Alle anderen Komponenten haben Raumtemperatur. Für die erfindungsgemässe Mischung gilt folgende Rezeptur (in Gew.-Teilen):

Eindosierung in Trichter:
31,47 Teile Antimontrioxid
15,73 Teile Aluminiumoxidhydrat
 5,35 Teile Pentabromdiphenylether
 3,15 Teile Diphenylkresylphosphat

Eindosierung in Gehäuse 2:
31,47 Teile Butandiol-1,4-Adipinsäurepolyester; Mol-Gewicht 2000 (OHZ 56)
 0,13 Teile Stearylamid
10,34 Teile 4,4'-Diisocyanatodiphenylmethan (MDI)
 2,36 Teile Butandiol-1,4 (NCO/OH = 1,01)

Auf der Schneckenmaschine sind folgende Temperaturen eingestellt:

| Gehäuse | 1 | 3 | 5 | 7 | 9 | 11 | 12 | Kopf |
|---|---|---|---|---|---|---|---|---|
| Temperatur | 100 | 130 | 130 | 130 | 90 | 80 | 75 | 190°C |

Nach 15-stündigem Tempern bei 80 °C und einer Lagerzeit von 2 Tagen kann dieses Granulat den verschiedensten PUR-Typen beigemischt werden.

Um die Flammschutznormen zu erfüllen, hat sich ein Zusatz von 15 Gew.-% Additiv-Granulat als erforderlich erwiesen.

Die folgenden Prüfwerte basieren auf einer Mischung von 85% des Polyurethans von Versuch 1 (ohne Flammschutzmittel) und 85% des Polyurethans von Versuch 2 (ohne Flammschutzmittel) bei 15% Zusatz des Flammschutzbatches (F.-Batch.).

| | Norm | 3 B 15% F.-Batch. 85% PUR v.V.1 | 3 C 15% F.-Batch. 85% PUR v.V.2 | Masseinh. |
|---|---|---|---|---|
| Zugfestigkeit | DIN 53504 | 43,7 | 25,9 | MPa |
| Reissdehnung | DIN 53504 | 654 | 726 | % |
| Abrieb | DIN 53516 | 55 | 132 | mm$^3$ |
| Shore A-Härte | DIN 53505 | 83 | 84 | |
| Oberflächenwiderstand | DIN 53482 | $5,4 \times 10^{11}$ | $5,6 \times 10^{11}$ | $\Omega$ |
| Durchgangswiderstand | DI 53482 | $2,3 \times 10^{10}$ | $3,9 \times 10^{11}$ | $\Omega$ cm |
| Durchschlagfestigkeit | DIN 53481 | 18,7 | 1,0 | KV/mm |
| UL-94-Test Nachbrennzeit | | 1 | 0 | s |
| UL-94-HB-Test Abbrandstrecke | UL-94 | 15 | 10 | mm |
| Einstufung in VDE-Test[xx] | DIN 57472/Teil 804 Prüfart A | V–0 | V–2 | |

| | Norm | 3 B 15% F.-Batch. 85% PUR v.V.1 | 3 C 15% F.-Batch. 85% PUR v.V.2 | Masseinh. |
|---|---|---|---|---|
| Nachbrennzeit | | 0 | 0 | s |
| zerstörte Probenlänge | | 10 | 10 | mm |
| VDE-Test[xxx] | DIN 57472/Teil 804 Prüfart C | | | |
| Nachbrennzeit | | – | | s |
| zerstörte Probenlänge | | – | | mm |

x, xx, xxx = Erläuterung nach Punkt 3

3% Tetraalkylammoniummethylsulfat C "Catafor CA 100 von Fa. Langer und Co., 2863 Ritterhude/Bremen), die bei Herstellung des Polyurethans von Versuch 2 (ohne Flammschutzmittel) über das Butandioladipat mit eingebracht wurden, reduzieren den Oberflächenwiderstand auf $2 \times 10^9$ OHM.

Folgende erfindungsgemässe Additiv-Granulat-Konzentrate wurden unter gleichen Bedingungen wie unter 3A) beschrieben hergestellt.

| Versuch | PUR (Tle) | Antimontioxid (Tle) | Pentabromdiphenylether (Tle) | Aluminiumoxidhydrat (Tle) | Diphenylkresylphosphat (Tle) |
|---|---|---|---|---|---|
| 3 D | 43,87 | 10,97 | 7,89 | 32,89 | 4,38 |
| 3 E | 40,65 | 20,33 | 14,63 | 20,33 | 4,06 |
| 3 F | 33,54 | 25,18 | 21,14 | 16,76 | 3,30 |
| 3 G | 37,18 | 37,17 | 3,34 | 18,59 | 3,72 |
| 3 H | 35,12 | 26,34 | 17,47 | 17,56 | 3,51 |
| 3 I | 33,78 | 33,79 | 12,16 | 16,89 | 3,38 |
| 3 J | 31,86 | 23,88 | 17,20 | 23,88 | 3,18 |

Alle Granulat-Konzentrate wurden mit dem TPU aus Versuch 2 (ohne Flammschutzmittel) in dem Verhältnis 15 : 85 abgemischt, zu Kabeln extrudiert und zu Platten gespritzt.

Folgende Werte sind zu verzeichnen:

| Versuch 3 D | 3 D | 3 E | 3 F | 3 G | 3 H | 3 I | 3 J |
|---|---|---|---|---|---|---|---|
| Zugfestigkeit (MPa) | 24,9 | 27,0 | 33,6 | 34,3 | 35,1 | 33,3 | 32,3 |
| Reissdehnung (%) | 645 | 582 | 615 | 645 | 611 | 528 | 602 |
| Abrieb | 123 | 74 | 78 | 107 | 85 | 91 | 91 |
| Shore A-Härte | 83 | 82 | 83 | 83 | 82 | 82 | 83 |
| VDE-Test best. | ja | ja | ja | ja | ja | ja | ja |
| Nachbrennzeit (s) | 33 | 78 | 18 | 31 | 40 | 78 | 42 |
| zerstörte Probe (mm) | 10 | 12 | 10 | 15 | 10 | 12 | 10 |

Man sieht eindeutig, dass die erfindungsgemässe Vierkomponenten-Kombination eine gute und ausreichende Flammschutzwirkung für die Kabelindustrie bringt. Die mechanischen Werte zeigen nur geringfügige Veränderung gegenüber gleichen Produkten ohne Flammschutzausrüstung.

Erläuterung der Prüfungen
xx) VDE-Test (DIN 57 472/Teil 804 – VDE 0472/11, § 37; IEEE 332)

In einen Metallkasten von 1200 mm Höhe, 300 mm Breite und 450 mm Tiefe wird ein 600 mm langes Kabelstück senkrecht aufgehängt. Mit Hilfe eines Propangasbrenners wird die Probe gezündet. Der Brenner wird so eingestellt, dass die Gesamtlänge der Flamme etwa 175 mm und die Länge des Kernkegels etwa 55 mm beträgt.

Der Gasbrenner wird so fixiert, dass seine Achse unter einem Winkel von 45° gegen die Horizontale geneigt ist. Die Spitze des Kernkegels soll etwa 10 mm von der Oberfläche und etwa 100 mm vom unteren Ende der Probe entfernt sein.

Die Dauer der Flammeinwirkung wird nach folgender Formel bestimmt:

$$t\,(s)\ =\ 60\ +\ \frac{\text{Gewicht der Probe (g)}}{25}$$

Die Prüfung gilt als bestanden, wenn die Probe nicht gebrannt hat, oder entstehende Flammeinwirkung von selbst verlöschen und die am weitesten von der Stelle der Flammwirkung entfernt liegende Brandbeschädigung nicht das obere Ende der Probe erreicht hat.

xxx) VDE-Test (DIN 57 472/Teil 804 Prüfart C; IEEE 383; SS 424 14 75)

Bei diesem Flammtest wird in einen Brennofen mit einer Höhe von 4 m, einer Breite von 1 m und einer Tiefe von 2 m ein leiterartiges Prüfgestell mit Kabeln befestigt. Das Prüfgestell hat eine Breite von 420 mm. Die Proben werden in einem Abstand von einem halben Kabeldurchmesser auf der Prüfleiter befestigt.

Der 340 mm breite Flachbrenner wird mit Propangasluftgemisch vor Prüfbeginn so eingestellt, dass die zugeführte Energie 75 MJ/h beträgt. Die Geschwindigkeit der umgebenden Luft am Dach des Ofens darf 8 m/s nicht überschreiten.

Der Brenner wird horizontal im Abstand von 75 mm zur Oberfläche der Proben und 600 mm vom unteren Ende der Proben entfernt angeordnet.

Die Flammeinwirkungsdauer beträgt 20 Minuten.

Die Prüfung gilt als bestanden, wenn entstehende Flammen von selbst verlöschen oder die am weitesten entfernt liegende Brandbeschädigung nicht das obere Ende der Proben erreicht.

**Patentansprüche**

1. Verfahren zur Herstellung eines halogenarmen, thermoplastischen Polyurethan-Elastomeren mit verbesserten Flammschutz-, elektrischen Oberflächen- und Abriebfestigkeiten durch Zusatz von Flammschutzmitteln und Füllstoffen, dadurch gekennzeichnet, dass man

A) dem thermoplastischen Polyurethanelastomeren 2,5 bis 24 Gew.-% einer Kombination aus mindestens 4 Additivkomponenten in Mengenanteilen von

B) 1 bis 10 Gew.-% an Antimontrioxid,

C) 0,3 bis 6 Gew.-% an chlorierten oder bromierten Verbindungen mit einem Halogengehalt von 50 bis 88 Gew.-%,

D) 1 bis 8 Gew.-% Aluminiumhydroxid in einer Körnung von 0,1 bis 100 μm,

E) 0,2 bis 4 Gew.-% an Phosphorsäuretriester und gegebenenfalls

F) bis zu 5 Gew.-% an quartären Tetraalkylammoniumsalzen,

vor, während oder nach der Polyurethan bildenden Reaktion einverleibt und/oder in Form eines Additivkonzentrats mit einem Additivgehalt von 25 bis 75 Gew.-% dem fertigen thermoplastischen Polyurethanelastomeren zumischt.

2. Halogenarme, thermoplastische, Flammschutzmittel und Füllstoffe enthaltende Polyurethanelastomere mit verbesserten Flammschutz-, elektrischen Oberflächen- und Abriebeigenschaften bestehend aus

A) 97,5 bis 76 Gew.-% eines – gegebenenfalls Lichtschutzmittel, Antioxidantien und UV-Absorber enthaltenden – thermoplastischen Polyurethanelastomeren,

2,5 bis 24 Gew.-% an Additivkomponenten B) bis F) in Mengenanteilen von

B) 1 bis 10 Gew.-% Antimontrioxid,

C) 0,3 bis 6 Gew.-% chlorierten und/oder bromierten Verbindungen mit einem Halogengehalt von 50 bis 88 Gew.-%,

D) 1 bis 8 Gew.-% Aluminiumhydroxid mit einer Teilchengrösse von 0,1 bis 100 μm,

E) 0,2 bis 4 Gew.-% an Phosphorsäuretriester und gegebenenfalls

F) bis zu 5 Gew.-% an quartären Tetraalkylammoniumsalzen.

3. Polyurethanelastomer nach Anspruch 2, dadurch gekennzeichnet, dass 3 bis 6 Gew.-% Antimontrioxid eingesetzt werden.

4. Polyurethanelastomere nach Ansprüchen 2 und 3, dadurch gekennzeichnet, dass bromierte aromatische Verbindungen mit einem Halogengehalt von 58 bis 75 Gew.-% verwendet werden.

5. Polyurethanelastomere nach Ansprüchen 2 bis 4, dadurch gekennzeichnet, dass Polybromdiphenyle, Polybromdiphenylether und/oder Polybrompolyphenylether in einer Menge von 0,3 bis 1 Gew.-% verwendet werden.

6. Polyurethanelastomere nach Ansprüchen 2 bis 5, dadurch gekennzeichnet, dass 1,5 bis 4 Gew.-% Aluminiumhydroxid in einer Körnung von 2 bis 40 μm verwendet werden.

7. Polyurethanelastomere nach Ansprüchen 2 bis 6, dadurch gekennzeichnet, dass aromatische Phosphorsäuretriester verwendet werden.

8. Polyurethanelastomere nach Ansprüchen 2 bis 7, dadurch gekennzeichnet, dass sie 5 bis 10 Gew.-% der Additivkomponenten B) bis F) und 95 bis 90 Gew.-% eines thermoplastischen Polyurethanelastomeren auf Basis

a) eines aromatischen Diisocyanates,

b) eines 2 Hydroxylgruppen aufweisenden Polyesters und Polyethers vom Molekulargewicht 800 bis 6000 oder Gemischen aus Polyestern und Polyethern, und

c) als Diolkettenverlängerer Butandiol-1,4, Hexandiol-1,6 und/oder Hydrochinon-di-β-hydroxyethylether enthalten,

wobei das NCO/OH-Äquivalentverhältnis zwischen 0,90 und 1,1 : 1, und das Molverhältnis der Komponenten b) und c) 1 : 1,5 bis 1 : 8 beträgt.

9. Verwendung thermoplastischer Polyurethane nach Ansprüchen 2 bis 8 zum Verspritzen, Extrudieren, Kalandrieren und Folienblasen zur Herstellung von Formkörpern, Kabelummantelungen und Folien.

## Claims

1. Process for the production of a low-halogen, thermoplastic polyurethane elastomer having improved flame resistance, electrical surface properties and abrasion resistance by the addition of flameproofing agents and fillers, characterised in that

A) 2.5 to 24% by weight of a combination of at least 4 additive components in quantitative proportions of

B) 1 to 10% by weight of antimony trioxide,

C) 0,3 to 6% by weight of chlorinated or brominated compounds with a halogen content of 50 to 88% by weight,

D) 1 to 8% by weight of aluminium hydroxide with a particle size of 0.1 to 100 μm,

E) 0.2 to 4% by weight of phosphoric acid triester and, optionally,

F) up to 5% by weight of quaternary tetraalkyl ammonium salts,

are incorporated in the thermoplastic polyurethane elastomer before, during or after the polyurethane-forming reaction and/or are added to and mixed with the finished thermoplastic polyurethane elastomer in the form of an additive concentrate with an additive content of 25 to 75% by weight.

2. Low-halogen, thermoplastic polyurethane elastomers containing flameproofing agents and fillers and having improved flameproof, electrical surface and abrasion properties, consisting of

A) 97.5 to 76% by weight of a thermoplastic polyurethane elastomer – optionally containing light stabilisers, antioxidants and UV absorbers,

2.5 to 24% by weight of additive components B) to F) in quantitative proportions of

B) 1 to 10% by weight of antimony trioxide,

C) 0.3 to 6% by weight of chlorinated and/or brominated compounds with a halogen content of 50 to 88% by weight,

D) 1 to 8% by weight of aluminium hydroxide with a particle size of 0.1 to 100 μm,

E) 0.2 to 4% by weight of phosphoric acid triester and, optionally

F) up to 5% by weight of quaternary tetraalkyl ammonium salts.

3. Polyurethane elastomer according to Claim 2, characterised in that 3 to 6% by weight of antimony trioxide are used.

4. Polyurethane elastomers according to Claims 2 and 3, characterised in that brominated aromatic compounds with a halogen content of 58 to 75% by weight are used.

5. Polyurethane elastomers according to Claims 2 to 4, characterised in that polybromodiphenyls, polybromodiphenyl ethers and/or polybromopolyphenyl ethers are used in an amount of 0.3 to 1% by weight.

6. Polyurethane elastomers according to Claims 2 to 5, characterised in that 1.5 to 4% by weight of aluminium hydroxide with a particle size of 2 to 40 μm are used.

7. Polyurethane elastomers according to Claims 2 to 6, characterised in that aromatic phosphoric acid triesters are used.

8. Polyurethane elastomers according to Claims 2 to 7, characterised in that they contain 5 to 10% by weight of the additive components B) to F) and 95 to 90% by weight of a thermoplastic polyurethane elastomer based on

a) an aromatic diisocyanate,

b) a polyether and polyester containing 2 hydroxyl groups and having a molecular weight of 800 to 6,000, or mixtures of polyesters and polyesters, and

c) 1,4-butanediol, 1,6-hexanediol and/or hydroquinone-di-β-hydroxyethyl ether as the diol chain-extending agent,

the NCO/OH equivalent ratio being between 0.90 and 1.1 : 1 and the molar ratio of components b) and c) being 1 : 1.5 to 1 : 8.

9. Use of thermoplastic polyurethanes according to Claims 2 to 8 for injection moulding, extrusion, calendering and film-blowing for the production of mouldings, cable sheaths and films.

## Revendications

1. Procédé de préparation d'un élastomère thermoplastique de polyuréthanne à faible teneur en halogènes et à propriétés améliorées de résistance aux flammes, de résistance électrique superficielle et de résistance à l'abrasion par adjonction d'agents ignifugeants et de matières de charge, caractérisé en ce que

A) on incorpore à l'élastomère thermoplastique de polyuréthanne 2,5 à 24% en poids d'une combinaison d'au moins quatre composants additifs en proportions de

B) 1 à 10% en poids de trioxyde d'antimoine,

C) 0,3 à 6% en poids de composés chlorés ou bromés à une teneur en halogènes de 50 à 88% en poids,

D) 1 à 8% en poids d'hydroxyde d'aluminium à une granulométrie de 0,1 à 100 μm,

E) 0,2 à 4% en poids d'un triester phosphorique et, le cas échéant,

F) jusqu'à 5% en poids de sels de tétraalkylammonium quaternaire,

avant, durant ou après la réaction de formation du polyuréthanne, et/ou on la mélange à l'élastomère thermoplastique de polyuréthanne fini sous la forme d'un concentré d'additifs à une teneur en additifs de 25 à 75% en poids.

2. Elastomères thermoplastiques de polyuréthannes à faible teneur en halogènes, contenant des agents ignifugeants et des matières de charge et possédant des propriétés améliorées de résistance aux flammes, de résistance électrique superficielle et de résistance à l'abrasion, consistant en

A) 97,5 à 76% en poids d'un élastomère thermoplastique de polyuréthanne contenant, le cas échéant, des agents de protection contre la lumière, des antioxydants et des absorbeurs de lumière ultraviolette,

2,5 à 24% en poids de composants additifs B) à F), à des proportions de

B) 1 à 10% en poids de trioxyde d'antimoine,

C) 0,3 à 6% en poids de composés chlorés et/ou bromés à une teneur en halogènes de 50 à 88% en poids,

D) 1 à 8% en poids d'hydroxyde d'aluminium à une dimension de particule de 0,1 à 100 µm,

E) 0,2 à 4% en poids de triesters phosphoriques et, le cas échéant,

F) jusqu'à 5% en poids de sels de tétraalkylammonium quaternaire.

3. Elastomère de polyuréthanne selon la revendication 2, caractérisé en ce qu'on utilise de 3 à 6% en poids de trioxyde d'antimoine.

4. Elastomères de polyuréthannes selon les revendications 2 et 3, caractérisé en ce que l'on utilise des composés aromatiques bromés à une teneur en halogènes de 58 à 75% en poids.

5. Elastomères de polyuréthannes selon les revendications 2 à 4, caractérisés en ce que l'on utilise des polybromodiphényles, des éthers polybromodiphényliques et/ou des éthers polybromopolyphényliques en quantités de 0,3 à 1% en poids.

6. Elastomères de polyuréthannes selon les revendications 2 à 5, caractérisés en ce que l'on utilise de 1,5 à 4% en poids d'hydroxyde d'aluminium à une granulométrie de 2 à 40 µm.

7. Elastomères de polyuréthannes selon les revendications 2 à 6, caractérisés en ce que l'on utilise des triesters phosphoriques aromatiques.

8. Elastomères de polyuréthannes selon les revendications 2 à 7, caractérisés en ce qu'ils contiennent de 5 à 10% en poids des composants additifs B) à F) et de 95 à 90% en poids d'un élastomère thermoplastique de polyuréthanne à base de

a) un diisocyanate aromatique,

b) un polyester et polyéther contenant deux groupes hydroxy, de poids moléculaire 800 à 6000 ou des mélanges de polyesters et de polyéthers, et

c) en tant qu'agents d'allongement des chaînes de type diol du 1,4-butane-diol, du 1,6-hexane-diol et/ou de l'éther di-β-hydroxy-éthylique de l'hydroquinone,

le rapport des équivalents NCO/OH allant de 0,90 à 1,1 : 1 et le rapport molaire des composants b) et c) allant de 1 : 1,5 à 1 : 8.

9. Utilisation des polyuréthannes thermoplastiques selon les revendications 2 à 8 pour le moulage par injection, l'extrusion, le calandrage et le soufflage de feuilles pour la préparation d'objets moulés, de gaines de câbles et de feuilles.